# EUROPÄISCHE PATENTSCHRIFT

(11) **EP 3 543 052 B1**
(45) Veröffentlichungstag und Bekanntmachung des Hinweises auf die Patenterteilung: **22.11.2023**
(21) Anmeldenummer: 19162410.5
(22) Anmeldetag: 13.03.2019
(51) Int. Cl.: B60J 7/06, B60J 5/06, B60P 7/135, B62D 33/04

(54) **NUTZFAHRZEUGAUFBAU UND NUTZFAHRZEUG**
COMMERCIAL VEHICLE STRUCTURE AND COMMERCIAL VEHICLE
CARROSSERIE DE VÉHICULE UTILITAIRE ET VÉHICULE UTILITAIRE

(30) Priorität: 23.03.2018 DE 202018101637 U
(43) Veröffentlichungstag der Anmeldung: 25.09.2019
(73) Patentinhaber: Kögel Trailer GmbH, 89349 Burtenbach (DE)
(72) Erfinder: Schmutz-Eggert, Gerhard, 89278 Nersingen (DE); Bielohlawek, Daniel, 86444 Affing (DE); Russ, Harald, 89182 Bernstadt (DE)
(74) Vertreter: Meissner Bolte Partnerschaft mbB

(56) Entgegenhaltungen:
- EP-A2- 3 127 789
- WO-A1-2013/164450
- DE-U1-202011 005 008
- DE-U1-202011 110 506

## Beschreibung

Die Erfindung betrifft einen Nutzfahrzeugaufbau, nämlich einen Planenaufbau mit den Merkmalen des Oberbegriffs des Anspruchs 1. Die Erfindung betrifft ferner ein Nutzfahrzeug mit einem derartigen Aufbau. Ein Nutzfahrzeugaufbau der eingangs genannten Art ist beispielsweise aus DE 10 2007 037 294 A1 bekannt.

Einstecklatten aus Holz oder Aluminium werden üblicherweise bei Planensattelaufliegern verwendet, um Querkräfte der Ladung beispielsweise bei Kurvenfahrten aufzunehmen. Die Einstecklatten sind in Lattentaschen gehalten, die an den Rungen des Nutzfahrzeugaufbaus angebracht sind. Die Einstecklatten erstrecken sich im Gebrauch parallel zur Ladefläche und bilden Rückhalteelemente, die verhindern, dass die Ladung seitlich über die Ladefläche vorsteht oder von der Ladefläche fällt.

Einstecklatten sind sperrig und werden bei Nichtgebrauch seitlich unter der Ladefläche in sogenannten Lattenlagerungen aufbewahrt. Die Lattenlagerungen verhindern, dass andere Zubehörteile, zum Beispiel Palettenstaukästen problemlos montiert werden können bzw. überhaupt Platz finden. Bei den im Gebrauch weiter oben angeordneten Einstecklatten geht die Gefahr aus, dass diese aus den Plattentaschen herausfallen und den Fahrer oder die Fahrerin verletzen. Die Mittelrungen sind üblicherweise auf Rollen gelagert und können sich etwas in Längsrichtung des Aufbaus verschieben. Da die Einstecklatten in den Lattentaschen lediglich aufliegen, können diese herabfallen, wenn der Abstand der Rungen, zwischen denen die Einstecklatten angeordnet sind, zu groß wird.

Einstecklatten haben generell nur eine begrenzte Rückhaltefunktion, die von der Festigkeit der Einstecklatten abhängt. Die Elastizität bekannter Einstecklatten ist relativ gering. Bei Überbelastung knicken Einstecklatten ab, unabhängig davon, ob diese aus Aluminium oder Holz bestehen. Diese bieten dann keine Rückhaltefunktion, sondern können aus den Lattentaschen herausfallen.

WO 2013/164450 A1 schlägt als Ersatz für Einstecklatten ein Sicherungsnetz vor, das aus sich kreuzenden Gurtbändern gebildet ist. Die Gurtbänder sind an den Kreuzungsstellen vernäht und können unter anderem mittels Ösen an den Rungen des Fahrzeugaufbaus verbunden werden. Das Sicherungsnetz benötigt einen großen Stauraum und ist bei der Installation unhandlich. Insbesondere muss das Sicherungsnetz auch bei nur halber Beladung des Fahrzeugaufbaus über die gesamte Fahrzeughöhe gespannt werden, da es sonst lose im Fahrtwind flattert.

DE 20 2011 005 008 U1 befasst sich mit einem Nutzfahrzeugaufbau, der in Längsrichtung verstellbare Rungen aufweist. In die Rungen sind Befestigungselemente integriert, die ein Lochmuster aus schlüssellochförmigen Öffnungen umfassen. In dieses Lochmuster können Spanngurte oder Netze eingehängt werden, um eine Ladungssicherung zu bewirken. Nachteilig hierbei ist es, dass ein Fahrer oder eine Fahrerin bei jeder Installation der Spanngurte deren Höhe neu festlegen muss. Außerdem bewirkt das Lochmuster in den Befestigungselementen, dass diese eine bestimmte Größe und somit eine erhöhte Masse aufweisen. Aus EP 3 127 789 A2 ist ein Nutzfahrzeugaufbau bekannt, der zur Ladungssicherung zwischen zwei benachbarten Rungen Einstecklatten aufweist, die durch ein Lochprofil in den Rungen auf unterschiedlichen Höhen angeordnet werden können. Die Einstecklatten sind unhandlich und erschweren den Be- und Entladevorgang. Anstelle der Einstecklatten können bei dem bekannten Nutzfahrzeugaufbau auch Netze zwischen die Rungen gespannt sein. Netze sind üblicherweise sehr elastisch und bieten daher keine ausreichende Ladungssicherung für schwere Güter. Zudem ist die Handhabung von Netzen aufwändig, da sie mit mehreren Befestigungspunkten an den Rungen fixiert werden müssen, was den Zeitaufwand für die Ladungssicherung erhöht. Auch beim Verstauen nehmen Netze einen relativ großen Stauraum ein, da sie sich nicht leicht kompakt zusammenlegen lassen. In der Praxis werden Netze aus Zeitgründen oft in unregelmäßiger Anordnung in einen Stauraum, beispielsweise eine Box, gelegt. Bei der Entnahme des Netzes aus der Box können sich die Befestigungsenden, die zum Eingriff in ein Schlüssellochmuster an der Runge geeignet sind, mit dem Netz verhaken, so dass das Netz zunächst aufwändig entwirrt werden muss.

Der Erfindung liegt die Aufgabe zu Grunde, den eingangs genannten Nutzfahrzeugaufbau dahingehend zu verbessern, dass das Rückhalteelement möglichst wenig Stauraum einnimmt, wenn dieses nicht gebraucht wird, und die Rückhaltefunktion optimiert wird. Der Erfindung liegt ferner die Aufgabe zu Grunde ein Nutzfahrzeug anzugeben.

Erfindungsgemäß wird diese Aufgabe durch einen Nutzfahrzeugaufbau mit den Merkmalen des Anspruchs 1 gelöst. Mit Blick auf das Nutzfahrzeug wird die Aufgabe durch den Gegenstand des Anspruchs 5 gelöst.

Konkret wird die Aufgabe durch einen Nutzfahrzeugaufbau, nämlich einen Planenaufbau, mit einer Ladefläche und Rungen gelöst, die mit der Ladefläche verbunden sind. Mehrere Rückhalteelemente sind zwischen zwei benachbarten Rungen angeordnet. Jedes Rückhalteelement umfasst ein gurtartiges, flexibles Aussteifungselement, das auf Zug belastbar ist. Das Aussteifungselement weist zwei Befestigungsenden auf. Die Befestigungsenden sind mit den benachbarten Rungen zugfest verbunden. Das Aussteifungselement ist zwischen den Rungen gespannt.

Die Erfindung hat mehrere Vorteile.

Im Unterschied zur den starren Einstecklatten sind gurtartige, flexible Aussteifungselemente leicht, sodass eine höhere Zuladung möglich ist, da schwere Einstecklatten nicht mitgeführt werden müssen. Die flexiblen Aussteifungselemente lassen sich einfach verstauen. Beispielsweise können die Aussteifungselemente zusammengerollt und im Werkzeugkasten verstaut werden. Es versteht sich, dass die Aussteifungselemente lösbar mit den Rungen verbunden sind.

Die Rückhaltewirkung durch die gurtartigen, flexiblen Aussteifungselemente ist hervorragend, da die Aussteifungselemente im Vergleich zu starren Einstecklatten flexibler und elastischer sind. Die Knickgefahr entfällt daher. Außerdem ist der Rückstelleffekt deutlich besser als bei Einstecklatten, da die Aussteifungselemente elastischer als Einstecklatten sind und ähnlich wie ein Gummiband arbeiten.

Die Aussteifungselemente sind dazu auf Zug belastbar und weisen zwei Befestigungsenden auf. Die Befestigungsenden sind mit den benachbarten Rungen zugfest verbunden. Das Aussteifungselement ist zwischen den Rungen gespannt. Das gespannte Aussteifungselement nimmt Querkräfte auf, die er von der Ladung auf das Aussteifungselement ausgeübt wird. Die Querkräfte werden durch das gespannte Aussteifungselement auf die Rungen und von dort auf den Ladeboden übertragen.

Im Unterschied zu den starren Einstecklatten ist das Aussteifungselement biegeelastisch und lässt sich verformen, so dass diese gut verstaut werden kann. Im montierten Zustand ist das Aussteifungselement auf Zug belastbar und kann zwischen den beiden Rungen gespannt werden.

Von dem Aussteifungselement geht eine sehr viel geringere Verletzungsgefahr als von Einstecklatten aus.

Ein weiterer Vorteil der Erfindung besteht darin, dass der Nutzfahrzeugaufbau, insbesondere der Planenaufbau insgesamt im Vergleich zu bekannten Aufbauten stabilisiert wird, da die Aussteifungselemente die Rungen, insbesondere die Eckrungen und die Mittelrungen miteinander verspannen. Im Unterschied dazu werden die bekannten Einstecklatten in die Lattentaschen lediglich eingelegt. Es erfolgt kein Kraftschluss in Längsrichtung des Ladebodens bzw. des Aufbaus.

Es versteht sich, dass im Prinzip ein einziges Aussteifungselement zwischen zwei Rungen vorgesehen sein kann. In der Praxis sind jedoch üblicherweise mehrere Aussteifungselemente zwischen zwei Rungen bzw. mehrere Aussteifungselemente im Aufbau vorgesehen.

Die Aussteifungselemente ersetzen die bekannten Einstecklatten, sodass eine entsprechende Anzahl von Aussteifungselementen vorgesehen ist.

Bevorzugte Ausführungsformen der Erfindung sind in den Unteransprüchen angegeben.

Das Aussteifungselement kann einen Gurt bzw. ein Gurtband oder ein Seil oder eine Kette umfassen. Besonders bevorzugt sind Gurte, da diese zugfest sind und klein zusammengerollt werden können. Die Erfindung funktioniert auch mit Seilen oder Ketten, die jeweils Zugkräfte übertragen können.

Erfindungsgemäß weist das Aussteifungselement eine Spanneinrichtung zum Aufbringen einer Spannkraft zwischen den beiden Rungen auf. Dadurch kann auf einfache Weise die zwischen zwei Rungen erforderliche Spannung des Aussteifungselements erzeugt werden. Die Spanneinrichtung kann beispielsweise eine Spannratsche, ein Kniehebel, ein Schnellspannelement oder eine Aufrollmechanik mit automatischer Verriegelung sein.

Erfindungsgemäß weisen die Rungen Befestigungsmittel zur Übertragung einer Zugkraft vom Aussteifungselement auf die Rungen auf. Das Befestigungsmittel zeichnet sich dadurch aus, dass dieses zur Übertragung von Zugkräften geeignet ist, die in einer Richtung entlang der Längsachse des Aufbaus wirken, wenn das Aussteifungselement zwischen den Rungen gespannt ist. Die Befestigungsmittel können auch Kräfte aufnehmen, die senkrecht zur Längsachse des Aufbaus wirken, wenn Querkräfte auftreten, die von der Ladung auf das Aussteifungselement beispielsweise bei Kurvenfahrten wirken.

Die Befestigungsmittel sind dazu vorgesehen, mit den Befestigungsenden des Aussteifungselements verbunden zu werden, insbesondere lösbar verbunden zu werden.

Die Befestigungsmittel können Haken, oder Clipelemente umfassen.

Haken haben den Vorteil, dass diese mit erfindungsgemäßen Schlaufen der Aussteifungselemente einfach und schnell verbunden und von diesen gelöst werden können.

Erfindungsgemäß sind die Befestigungsmittel an den Rungen höhenverstellbar befestigt. Dies kann beispielsweise durch ein Lochmuster erfolgen, das in den Rungen ausgebildet ist.

Die Erfindung wird nachstehend anhand eines Ausführungsbeispiels unter Bezug auf die beigefügten schematischen Zeichnungen mit weiteren Einzelheiten näher erläutert.

In diesen zeigen
- Fig. 1: eine Seitenansicht eines Sattelaufliegers mit geöffneter Seitenwand nach einem erfindungsgemäßen Ausführungsbeispiel; und
- Fig. 2: den Sattelauflieger gemäß Fig. 1 mit gurtartigen Aussteifungselementen.

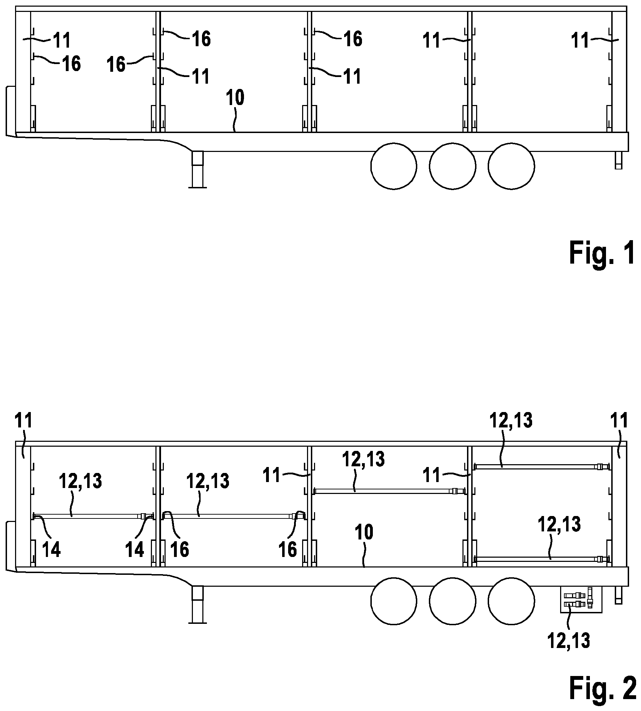

Fig. 1 zeigt eine Seitenansicht eines Sattelaufliegers mit geöffneter Seitenwand und Befestigungsmitteln 16 zur Verbindung mit Aussteifungselementen. Fig. 2 zeigt den selben Sattelauflieger mit geöffneter Seitenwand und eingehängten Aussteifungselementen 13. Die Aussteifungselemente 13 können wie die bekannten Einstecklatten in unterschiedlichen Höhen und zwischen verschiedenen Rungen 11 angebracht werden, um den Sattelauflieger individuell an die zu befördernde Ladung anzupassen. Insofern bietet die Erfindung bzw. das erfindungsgemäß Ausführungsbeispiel dieselben Funktionalitäten wie ein bekannter Sattelauflieger mit Einstecklatten.

Zwischen benachbarten Rungen 11 kann ein einziges Aussteifungselement 13 vorgesehen sein, wie in den in Fahrtrichtung vorderen 3 Feldern gezeigt. Die Aussteifungselemente 13 benachbarter Felder können auf derselben Höhe oder auf unterschiedlichen Höhen angeordnet sein. Wie im vierten Feld gezeigt, können mehrere Aussteifungselemente 13 pro Feld vorgesehen sein. Es ist bspw. möglich, dass ein Aussteifungselement 13 im Bereich des Depots, also bodennah, und ein weiteres Aussteifungselement 13 dachnah gespannt ist.

Wie in den Figuren 1, 2 zu erkennen, sind die Rungen 11 mit der Ladefläche 10 des Nutzfahrzeugaufbaus bzw. des Nutzfahrzeugs verbunden. Die Rungen 11 können in an sich bekannter Weise ausgebildet sein. Bei den Rungen 11 handelt es sich um Eckrungen und Mittelrungen. Die Mittelrungen können an den Dachträgern in bekannter Weise an Rollen beweglich aufgehängt sein.

Anstelle der bekannten Einstecklatten weist der Sattelauflieger gemäß Fig. 2 gurtartige, flexible Aussteifungselemente 13 auf. Bei diesen Aussteifungselementen handelt es sich um Bänder oder Gurte aus textilen Materialien, beispielsweise Gewebe, Gewirke oder Geflechte. Derartige Bänder oder Gurte werden im Zusammenhang mit Ladungssicherungssystemen, zur Aussteifung von Schiebedächern oder zur Befestigung von Planenspannern an Planen verwendet.

Andere flexible Aussteifungselemente, wie beispielsweise Seile, insbesondere Stahlseile oder Ketten sind möglich. Die Aussteifungselemente 13 zeichnen sich dadurch aus, dass diese einerseits auf Zug belastbar und andererseits so flexibel sind, dass diese zusammengerollt oder zusammengelegt werden können. Dadurch können die Aussteifungselemente 13 sowohl als Rückhalteelemente eingesetzt, als auch in kleinen Behältern, wie beispielsweise im Werkzeugkasten verstaut werden, wie in Fig. 2 dargestellt.

Die Aussteifungselemente 13 weisen jeweils zwei Befestigungsenden 14 auf, die dazu geeignet sind, mit den Befestigungsmitteln 16 der Rungen 11 verbunden zu werden. Die Befestigungsenden 14 sind Schlaufen, die in die Befestigungsmittel 16 der Rungen 11 eingehängt werden. Wie in Fig. 2 zu sehen, sind die Befestigungsenden 14 mit den benachbarten Rungen 11 zugfest verbunden.

Das Aussteifungselement 13 ist zwischen den Rungen 11 gespannt. Dazu ist eine Spanneinrichtung 15 vorgesehen, die in das Aussteifungselement 13 eingefügt ist und dessen Länge zum Spannen verkürzen kann. Hierfür bekommen geeignete Gurtspanner, bspw. Spannratschen oder andere Mittel zur Anwendung, die eine Spannkraft zwischen den beiden Rungen aufbringen können.

Die Befestigungsmittel 16 zur Übertragung einer Zugkraft auf die Rungen 11 sind im Beispiel gemäß Figuren 1, 2 als Haken ausgebildet. Dabei greifen die als Schlaufen ausgebildeten Befestigungsenden 14 der Aussteifungselemente 13 in die Haken ein, sodass sowohl Zugkräfte in Längsrichtung des Nutzfahrzeugaufbaus als auch Querkräfte quer zur Längsrichtung des Nutzfahrzeugaufbaus übertragen werden können. Andere Befestigungsmittel 16, wie Ösen, Ringe oder Clipelemente sind möglich.

Die Befestigungsmittel 16 können höhenverstellbar sein.

Im Rahmen der Erfindung wird die Verwendung eines gurtartigen, flexiblen Aussteifungselement 13 zum Aussteifen der Seitenwand eines Nutzfahrzeugaufbaus, insbesondere eines Planenaufbau offenbart, bei der das Rückhalteelement zwischen zwei Rungen 11 angeordnet und mit diesen verbunden ist. Das Rückhalteelement ist zwischen den Rungen 11 derart gespannt, dass Querkräfte der Ladung vom Aussteifungselement 13 auf die Rungen 11 übertragen werden.

Im Gebrauch wird das Aussteifungselement 13, insbesondere das Gurtband wie folgt angebracht. Zunächst wird das Aussteifungselement 13 mit einem Befestigungsende 14 in ein Befestigungsmittel 16 einer Runge 11 eingehängt. Dann wird das andere Befestigungsenden 14 in die benachbarte Runge 11 entsprechend eingehängt. Bei geöffnetem Gurtspanner wird das Aussteifungselement 13 leicht straffgezogen. Dann wird der Gurtspanner betätigt, sodass das Aussteifungselement 13 straff zwischen den beiden Rungen 11 gespannt ist.

### Bezugszeichenliste

- 10: Ladefläche
- 11: Rungen
- 12: Rückhalteelement
- 13: flexibles Aussteifungselement
- 14: Befestigungsenden
- 15: Spanneinrichtung
- 16: Befestigungsmittel

## Patentansprüche

1. Nutzfahrzeugaufbau, nämlich Planenaufbau, mit einer Ladefläche (10) und Rungen (11), die mit der Ladefläche (10) verbunden sind, wobei mehrere Rückhalteelemente (12) zwischen zwei benachbarten Rungen (11) angeordnet sind, diese verbinden und jeweils ein gurtartiges, flexibles Aussteifungselement (13) umfassen, das auf Zug belastbar ist und zwei Befestigungsenden (14) aufweist, wobei die Befestigungsenden (14) mit den benachbarten Rungen (11) zugfest verbunden sind und das jeweilige Aussteifungselement (13) zwischen den Rungen (11) gespannt ist, wobei die Rungen (11) Befestigungsmittel (16) zur Übertragung einer Zugkraft vom jeweiligen Aussteifungselement (13) auf die Rungen (11) aufweisen und die Befestigungsmittel (16) an den Rungen (11) höhenverstellbar befestigt sind, wobei das jeweilige Aussteifungselement (13) eine Spanneinrichtung (15) zum Aufbringen einer Spannkraft zwischen den beiden Rungen (11) aufweist, wobei die beiden Befestigungsenden (14) des jeweiligen Aussteifungselements (13) Schlaufen sind, die in die Befestigungsmittel (16) der Rungen (11) eingehängt sind.

2. Nutzfahrzeugaufbau nach Anspruch 1,
**dadurch gekennzeichnet, dass**
das Aussteifungselement (13) einen Gurt oder ein Seil oder eine Kette umfasst.

3. Nutzfahrzeugaufbau nach Anspruch 1 oder 2,
**dadurch gekennzeichnet, dass**
die Spanneinrichtung (15) eine Spannratsche, einen Kniehebel, ein Schnellspannelement oder eine Aufrollmechanik mit automatischer Verriegelung umfasst.

4. Nutzfahrzeugaufbau nach einem der vorhergehenden Ansprüche, **dadurch gekennzeichnet, dass** die Befestigungsmittel (16) Haken, oder Clipelemente umfassen.

5. Nutzfahrzeug mit einem Nutzfahrzeugaufbau nach Anspruch 1.

## Claims

1. A commercial vehicle structure, specifically curtain-sided structure, having a load bed (10) and stanchions (11) connected to the load bed (10), wherein multiple retaining elements (12) are arranged between two adjacent stanchions (11), connect the latter and each comprise a strap-like, flexible reinforcement element (13), which can be placed under tensile loading and has two fastening ends (14), wherein the fastening ends (14) are connected to the adjacent stanchions (11) in a tension-resistant manner, and the respective reinforcement element (13) is tensioned between the stanchions (11), wherein the stanchions (11) have fastening means (16) for transmitting a tensile force from the respective reinforcement element (13) to the stanchions (11), and the fastening means (16) are fastened to the stanchions (11) in a height-adjustable manner, wherein the respective reinforcement element (13) has a tensioning device (15) for applying a tensioning force between the two stanchions (11), wherein the two fastening ends (14) of the respective reinforcement element (13) are loops which are hooked into the fastening means (16) or the stanchions (11).

2. The commercial vehicle structure according to claim 1, **characterised in that**
the reinforcement element (13) comprises a strap or a rope or a chain.

3. The commercial vehicle structure according to claim 1 or 2,
**characterised in that**
the tensioning device (15) comprises a tensioning ratchet, a toggle lever, a quick-release clamping element or a roll-up mechanism with automatic locking.

4. The commercial vehicle structure according to any one of the preceding claims,
**characterised in that**
the fastening means (16) comprise hooks or clip elements.

5. A commercial vehicle having a commercial vehicle structure according to claim 1.

## Revendications

1. Carrosserie de véhicule utilitaire, à savoir carrosserie bâchée, pourvue d'une surface de chargement (10) et de ranchers (11), qui sont assemblés avec la surface de chargement (10), plusieurs éléments de retenue (12) étant placés entre deux ranchers (11) voisins, assemblant ces derniers et comprenant chacun un élément de renfort (13) souple, de type sangle, qui est susceptible d'être contraint en traction et qui comporte deux extrémités de fixation (14), les extrémités de fixation (14) étant assemblées de manière à résister à la traction avec les ranchers (11) voisins et l'élément de renfort (13) concerné étant tendu entre les ranchers (11), les ranchers (11) comportant des moyens de fixation (16), destinés à transmettre une force de traction de l'élément de renfort (13) concerné sur les ranchers (11) et les moyens de fixation (16) étant fixés de manière ajustable en hauteur sur les ranchers (11), l'élément de renfort (13) concerné comportant un système tenseur (15), destiné à appliquer une force de tension entre les deux ranchers (11), les deux extrémités de fixation (14) de l'élément de renfort (13) concerné étant des boucles, qui sont accrochées dans le moyens de fixation (16) des ranchers (11).

2. Carrosserie de véhicule utilitaire selon la revendication 1,
**caractérisée en ce que**
l'élément de renfort (13) comprend une sangle ou un câble ou une chaîne.

3. Carrosserie de véhicule utilitaire selon la revendication 1 ou 2,
**caractérisée en ce que**
le système tenseur (15) comprend un cliquet de serrage, un levier à genouillère, un élément tendeur rapide ou un mécanisme d'enroulement à verrouillage automatique.

4. Carrosserie de véhicule utilitaire selon l'une quelconque des revendications précédentes,
**caractérisée en ce que**
les moyens de fixation (16) comprennent des crochets ou des éléments de clipsage.

5. Véhicule utilitaire pourvu d'une carrosserie de véhicule utilitaire selon la revendication 1.
